# EUROPEAN PATENT SPECIFICATION

(11) **EP 4 246 650 B1**
(45) Date of publication and mention of the grant of the patent: **02.09.2026**
(21) Application number: 22890378.7
(22) Date of filing: 02.11.2022
(51) Int. Cl.: H01M 10/058, H01M 10/44, H01M 10/052

(54) **ACTIVATION METHOD AND ACTIVATION DEVICE FOR LITHIUM SECONDARY BATTERY**
AKTIVIERUNGSVERFAHREN UND AKTIVIERUNGSVORRICHTUNG FÜR LITHIUMSEKUNDÄRBATTERIE
PROCÉDÉ D'ACTIVATION ET DISPOSITIF D'ACTIVATION POUR BATTERIE SECONDAIRE AU LITHIUM

(30) Priority: 04.11.2021 KR 20210150389
(43) Date of publication of application: 20.09.2023
(73) Proprietor: LG Energy Solution, Ltd., Seoul 07335 (KR)
(72) Inventor: KIM, Sang Jih, Daejeon 34122 (KR); SUNG, Nak Gi, Daejeon 34122 (KR); LEE, Eui Kyung, Daejeon 34122 (KR); HONG, Suk Hyun, Daejeon 34122 (KR)
(74) Representative: Goddar, Heinz J.
(86) International application number: PCT/KR2022/017066
(87) International publication number: WO 2023/080647

(56) References cited:
- JP-B2- 5 855 484
- KR-A- 20160 132 572
- KR-A- 20170 112 628
- KR-A- 20180 093 321
- KR-A- 20200 129 518
- KR-A- 20210 090 459

## Description

### [Technical Field]

This application claims the benefit of priority based on Korean Patent Application No. 10-2021-0150389, filed on November 4, 2021.

The present invention relates to an activation method for a lithium secondary battery for preventing a localized charging non-uniformity phenomenon.

### [Background Art]

Generally, the secondary battery depending on its shape can be classified into a cylindrical, a prismatic, a pouch-type, etc. Among them, a pouch-type secondary battery, because the exterior is made up of exterior materials that are composed of a metal layer(foil) and a synthetic resin multilayer that is coated on the upper and lower surface of the metal layer, light weighting of a battery is possible by significantly reducing the weight of the battery compared to a cylindrical or a prismatic battery which uses a metal can, and a pouch-type battery is drawing a lot of attention as it can be changed into diverse forms.

In such a pouch-type secondary battery, an electrode assembly is stored in a stacked form, an electrode tab and an electrode lead are connected to the electrode assembly, and the electrode lead protrudes from the pouch exterior material. Such electrode lead is supplied with electric power from an external device by electrically connected to the external device through contact.

A pouch-type secondary battery is manufactured through a process of assembling the cell and activating the battery and the battery activation process, the secondary battery cell is loaded to an apparatus for charging and discharging, and serves as a necessary condition for activation, and charging and discharging are performed. As such, the process of performing a predetermined charging and discharging using the apparatus for charging and discharging for a battery activation is called a formation process.

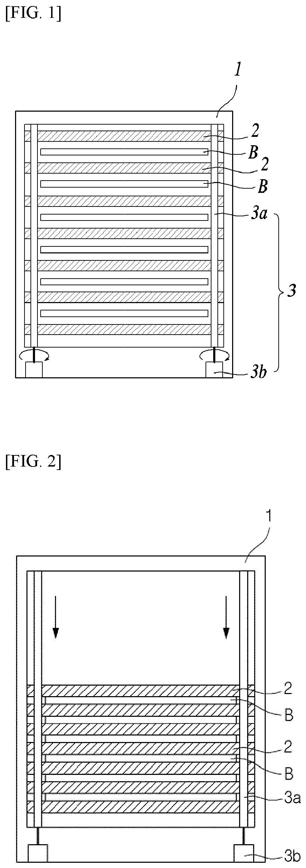

FIG.1 and FIG.2 illustrate a device for a formation process. Referring to FIG.1, the formation device includes a frame (1), pressure plates (2), and driving parts (3: 3a, 3b). The driving parts includes a driving shaft (3a) and a driving motor (3b).

Inside the frame (1), a plurality of pressure plates (2) is placed, and a secondary battery (B) to perform the formation process is interposed between the pressure plates (2).

As illustrated in FIG. 1, when the driving shaft (3a) rotates by the rotation of the driving motor (3b) and the plurality of pressure plates (2) engaged therewith move in one direction, the pressure plates (2) pressurize both sides of the secondary battery (B) as shown in FIG. 2. Such pressure plates are made of a firm material such as an aluminum, etc.

Meanwhile, the electrode assembly stored inside the secondary battery has a structure in which a positive electrode/a separator/a negative electrode are laminated, and the positive electrode and the negative electrode are manufactured by applying an electrode slurry on an electrode current collector, drying, and rolling. Since such electrode slurry is applied in a fluid state, the electrode slurry coating part flows down due to the characteristics of the fluid, the end of the electrode forms an inclined shape, and this is called a sliding portion.

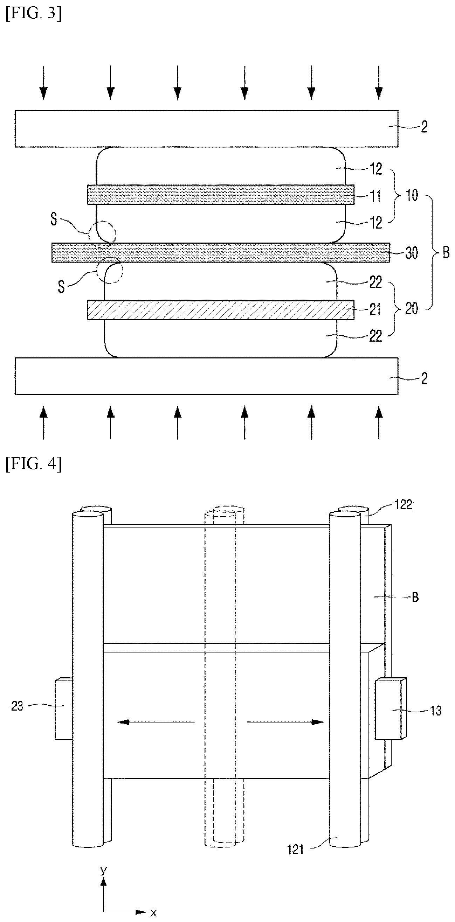

FIG. 3 is a diagram illustrating problems that occur when a battery is pressurized with the pressure plates included in the formation device of FIG. 1 and FIG. 2. Referring to FIG. 3, a pair of opposing pressure plates (2) are pressurizing both sides of a secondary battery where a negative electrode (10) in which a negative electrode active material (12) is laminated on both sides of a negative current collector (11); a positive electrode (20) in which a positive electrode active material (22) is laminated on both sides of a positive electrode current collector (21); and a separator (30) which is interposed and laminated between the positive electrode (20) and the negative electrode (10) are stacked. In addition, the positive electrode active material layer (22) and the negative electrode active material layer (12) include an inclined form of a sliding portion (S) at the end, respectively.

In addition, the end of the electrode coating portion coated with the slurry for an electrode, as the slurry for an electrode is a fluid, it flows down to the current collector to form a sliding portion (S) inclined with respect to the plane of the current collector. Since the thickness of the electrode active material layer in the sliding portion (S) is relatively thin compared to the thickness of the electrode active material layer in the planar portion, it is difficult to pressurize the sliding portion (S) with the flat pressure plate (2). Accordingly, a gas trap phenomenon in which gas generated during charging is trapped in a separation space between the sliding portion (S) and the separator (30) may occur. In addition, such trapped gas is in a form of bubble, limits the impregnation of an electrolyte solution, and hinders the movement of lithium ions, thereby causing deterioration of the battery quality such as localized charging non-uniformity phenomenon, lithium precipitation, etc.

Therefore, the development of a technology related to an activation method and an activation device is needed to solve the above-described problems.

KR 10-2021-0090459 discloses a pressurizing jig to remove gas generated in the activation process of a battery cell, including a plate-shaped lower plate on which battery cells that have undergone the activation process are mounted and fixed; and an upper plate for pressurizing the battery cells mounted on the lower plate from the upper part. The upper plate has a structure in which n (n>=3) separate sub-plates are assembled to form one upper plate. The sub-plates have a structure for independently pressurizing the battery cells.

### [Technical Problem]

The present invention is directed to solve the problems of the conventional art, and the present invention provides an activation method for a secondary battery for reducing a risk of localized charging non-uniformity phenomenon, lithium precipitation, etc. by preventing a gas trap in an electrode sliding portion.

### [Technical Solution]

The activation method for a lithium secondary battery according to an exemplary embodiment of the present invention includes: a pre-aging process which ages an assembled lithium secondary battery at room temperature ranging from 18 °Cto 28 °C; a formation process which charges the lithium secondary battery; a roll-pressing process which pressurizes the lithium secondary battery using a pressure roller, wherein the roll-pressing process pressurizes from the center of the lithium secondary battery to the edge direction where an electrode lead is located.

In the activation method according to an exemplary embodiment of the present invention, the roll-pressing process may be performed before the formation process.

In an activation method according to an exemplary embodiment of the present invention, the roll-pressing process may be performed during the formation process.

In the activation method according to an exemplary embodiment of the present invention, the roll-pressing process may be performed before and during the formation process.

In the activation method according to an exemplary embodiment of the present invention, the roll-pressing process may be performed 2 to 5 times.

In the activation method according to an exemplary embodiment of the present invention, the roll-pressing process may pressurize the lithium secondary battery at a nip-pressure of 20 kgf/cm to 60 kgf/cm.

In the activation method according to one embodiment of the present invention, the pressure roller is composed of an upper pressure roller and a lower pressure roller, and the lithium secondary battery may be pressurized while passing between the upper pressure roller and the lower pressure roller.

In the activation method according to one embodiment of the present invention, the formation process may include a process of applying surface pressure to the lithium secondary battery during charging.

In the activation method according to one embodiment of the present invention, the formation process may include a plurality of formation steps in which a charge end SOC are set differently, and one or more conditions selected from each charging speed and surface pressure applied to the lithium secondary battery may be set differently for each formation step.

In the activation method according to one embodiment of the present invention, it may further include an aging process which ages the battery completed the formation.

Further described herein is an activation device. The activation device for a lithium secondary battery includes a formation part configured to pressurize while charging/discharging the battery; an upper pressure roller and a lower pressure roller; and a roll-pressing part which pressurizes the battery in a state where the battery is interposed between the upper pressure roller and lower pressure roller.

I It may further include a transference part which takes out and carries in/out the battery between the formation part and the roll-pressing part. The transference part includes a pick-up part which carries out/in the battery accommodated in the formation part or the roll-pressing part; a driving part which moves the pick-up part; and a controller which controls the operation of the pick-up part and the driving part.

The roll-pressing part may further include an upper pressure roller and a lower pressure roller; a driving part which drives to rotate the upper pressure roller and the lower pressure roller; and a pressure cylinder which makes the upper pressure roller to move in the direction of the lower pressure roller or in the opposite direction.

The formation part may include a frame which accommodates a plurality of battery cells; a chare/discharge part which connects to the electrode lead of the battery, and charge and discharge the battery; a plurality of pressure plates that pressurizes both sides of the battery; and a driver which moves the plurality of pressure plates.

### [Advantageous Effects]

The activation method according to the present invention pressurizes the sliding portion having relatively thin thickness at the same force as the planar potion of the electrode through pressurization by roll-pressing, thereby preventing gas from being trapped in the sliding portion.

### [Brief Description of Drawings]

FIG. 1 and FIG. 2 are schematic diagrams showing the formation device.
FIG. 3 is a diagram showing problems that occur when pressurizing the battery with pressure plates included in the formation device of FIG. 1.
FIG. 4 is a schematic diagram showing a roll-pressing process according to an exemplary embodiment of the present invention.
FIG. 5 is a conceptual diagram showing an effect of a roll-pressing process according to an exemplary embodiment of the present invention.
FIG. 6 is a flowchart of an activation method according to an exemplary embodiment of the present invention.
FIG. 7 is a flowchart of an activation method according to another exemplary embodiment of the present invention.
FIG. 8 is a flowchart of an activation method according to another exemplary embodiment of the present invention.
FIG. 9 is a conceptual diagram showing an activation device for a lithium secondary battery.
FIG. 10 is a perspective view of a roll-pressing part according to an exemplary embodiment of the present invention.
FIG. 11 is a top view perspective diagram of the roll-pressing part.
FIG. 12 is a front view perspective diagram of the roll-pressing part.
FIG. 13 is a photo of a negative electrode after disassembling the secondary battery after a long cycle of Example and Comparative Example.
FIG. 14 is a flowchart of an activation method according to another exemplary embodiment of the present invention.

### [Description of reference numerals]

1: FRAME
2: PRESSURE PLATE
3: DRIVING PART
3a: DRIVING SHAFT 3b: DRIVING MOTOR
B: SECONDARY BATTERY
10: NEGATIVE ELECTRODE
11: NEGATIVE ELECTRODE CURRENT COLLECTOR
12: NEGATIVE ELECTRODE ACTIVE MATERIAL LAYER
20: POSITIVE ELECTRODE
21: POSITIVE ELECTRODE CURRENT COLLECTOR
22: POSITIVE ELECTRODE ACTIVE MATERIAL LAYER
30: SEPARATOR
S: SLIDING PORTION
121,122: PRESSURE ROLLER

### [Best Mode for Carrying Out the invention]

Hereinafter, the preferred embodiments of the present invention will be described in detail reference to the accompanying drawings. Prior to this, the terms or the words used in the present specification and claims should not be restrictively interpreted as ordinary meanings or dictionary-based meanings, but should be interpreted as meanings and concepts consistent with the technical ideas of the present invention on the basis of the principle that an inventor can properly define the concept of a term to describe and explain his or her invention in the best way.

Accordingly, since the embodiments described in the specification and the configurations described in the drawings are only the most preferred embodiments of the present invention, and do not represent all of the technical ideas of the present invention, it should be understood that there may be various equivalents and modifications that may substitute them at the time of filing the present application.

Hereinafter, the present invention will be described in more detail.

### The Activation method according to the First Embodiment

The activation method for a lithium secondary battery according to an exemplary embodiment of the present invention includes a pre-aging process which ages the assembled lithium secondary battery at room temperature ranging from 18 °Cto 28 °C; a formation process which charges the lithium secondary battery; a roll-pressing process which pressurizes the lithium secondary battery using a pressure roller. The roll-pressing process pressurizes from the center of the lithium secondary battery toward the edge where the electrode lead is located.

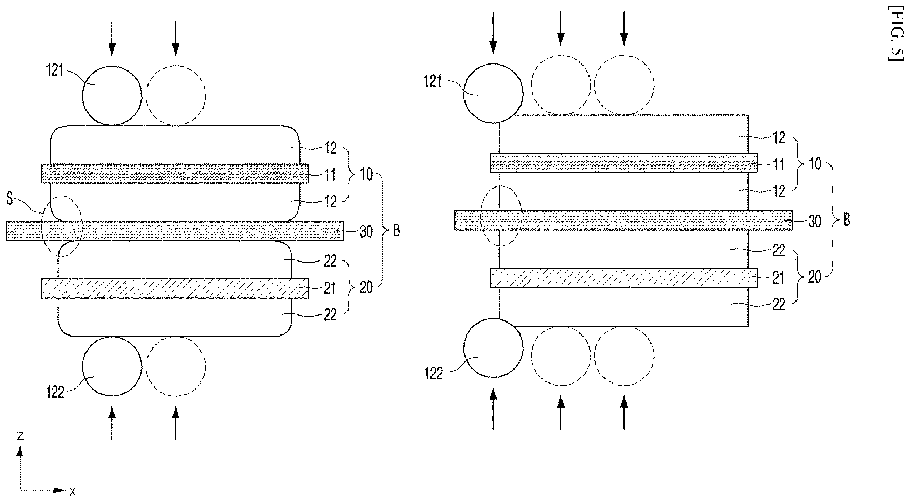

FIG. 4 is a schematic view showing a roll-pressing process of the present invention, and FIG. 5 is a conceptual diagram showing an effect of the roll-pressing process according to an exemplary embodiment of the present invention. Referring to these drawings, in the roll-pressing process of the present invention, the pressure roller includes an upper pressure roller (121) and a lower pressure roller (122), and the lithium secondary battery (B) is interposed between the upper pressure roller (121) and the lower pressure roller (122) which are facing each other and rolled to pressurize the battery.

The pressurization of such rollers (121, 122) applies pressure to the battery (B) in the form of nip-pressure, and the paired upper and lower pressure rollers (121, 122) start from the center of the battery (B) and rotate toward the edge where the electrode leads (13, 23) are located, and pressurizes sequentially from the center of the battery to the edge where the electrode leads are located.

By such sequential pressurization, the internal gas has directionality and moves from the center of the battery to the edge. In addition, in a roller pressurization, since the pressurized surface of the roller is not flat but in a curved shape, the sliding portion (S) which has relatively thin thickness compared to the center part of the battery can be pressurized with the same load as the center part of the battery. Thereby, it is possible to prevent gas being trapped, and accordingly, to prevent localized insufficient charging and lithium precipitation in the sliding portion (S).

As such, the activation method according to the present invention includes a roll-pressing process of applying nip-pressure to the battery, wherein the roll-pressing process rolls from the center of the battery to the edge of the battery where the sliding portion (S) is located. Thereby, it can exhaust the internal gas of the electrode assembly to the outside of the electrode assembly, and can prevent gas from being trapped in the sliding portion since it can pressurize the sliding portion which has relatively thin thickness.

The pre-aging process is a process of aging the battery so that the electrode assembly is sufficiently impregnated with the electrolyte solution after assembling the battery. When assembling the secondary battery is completed, it may perform the pre-aging process which stabilizes by leaving the electrolyte solution injected in the secondary battery at room temperature for a certain period of time so that the electrolyte solution which is injected in the secondary battery is sufficiently wetted inside the electrode assembly.

More specifically, when charging the secondary battery, lithium ions are intercalated to the negative electrode to achieve charge neutrality when electrons move to the negative electrode along a wire and become charged. At this time, lithium ions can be intercalated to the electrolyte-impregnated area, that is, a wetting area where the ion movement path is maintained, but intercalation is relatively difficult in an electrolyte non-wetting area. Therefore, through the pre-aging process, the battery may be aged in an environment having constant humidity and temperature condition, so the electrolyte can permeate well into the positive electrode and the negative electrode.

In one specific example, the time required for the pre-aging process may be specifically 3 to 72 hours, 6 to 60 hours, 12 to 48 hours, and it may be properly adjusted according to the material of a positive electrode, a negative electrode, and an electrolyte solution, the design capacity of the secondary battery and the like.

In addition, the pre-aging process may be performed at room temperature condition of 18°C to 28°C, specifically 19°C to 27°C, more specifically 20°C to 26°C, and even more specifically, it may be performed at 21°C to 25°C, but it is not necessarily limited thereto, and may be appropriately changed according to the characteristics of a battery to be designed.

The formation process is a step of charging the secondary battery, and forming a SEI (Solid electrolyte interface, hereinafter referred to as "SEI") film layer of the negative electrode, and it is a process of charging the assembled secondary battery within a SOC level of a predetermined range of full charge capacity (SOC 100, SOC; State Of Charge). Here, the predetermined range SOC may be SOC 20% to SOC 80%, and preferably SOC 40% to 70%.

When the formation process is performed in a lithium secondary battery, lithium ions derived from lithium transition metal oxides of such as a positive electrode active layer and positive electrode additive, etc. contained in a positive electrode move to a carbon electrode of a negative electrode. Since the lithium ions are highly reactive, reacting with a carbon negative electrode and produce compounds such as Li₂CO₃, LiO, and LiOH, etc. and due to such compounds, the SEI film is formed on the surface of the negative electrode. The SEI film is a nonconductor formed when the movement amount of ions in the battery is increased. When the SEI film is formed, it prevents the lithium ions from reacting with other substances in the negative electrode during the subsequent charging of the secondary battery, and serves to perform a function of an ion tunnel which only allows lithium ions to pass through. After the SEI film is formed, lithium ions do not react with the negative electrode or other substances, thereby the amount of lithium ions is reversibly maintained and the charging and discharging of the secondary battery are reversibly maintained, thereby improving the lifespan of the secondary battery. Furthermore, the battery is not easily collapsed even when it is left alone at a high temperature or when charging and discharging are performed repeatedly, so the change in the thickness of the battery is less likely to occur.

The charging conditions of such formation process may be performed according to conditions known in the art. Specifically, as a charging method, charging can be performed by a constant current method until it reaches the charging end voltage. At this time, the charging speed (C-rate) may be 0.01C to 2C, 0.1C to 1.5C, and may be 0.2C to 1C, but it is not necessarily limited thereto, and can be appropriately changed according to the characteristics of the materials of the positive electrode and the negative electrode.

In addition, the temperature condition of the initial charging process may be 18°C to 28°C, specifically 19°C to 27°C, and more specifically 20°C to 26°C.

In one specific example, the formation process may include a process of applying surface pressure to the lithium secondary battery being charged. When the surface pressure is applied to the lithium secondary battery during the formation process, it may prevent an excessive volume expansion of the electrode due to charging and discharging, and inducing gas generation by catalyzing chemical reactions of the battery, and moving the generated gas to a gas pocket part.

In the formation process according to one embodiment of the present invention, the formation process for applying a surface pressure to a lithium secondary battery being charged may be performed in a state in which the lithium secondary battery is loaded to a jig formation device capable of pressurizing the lithium secondary battery, and this is referred to as a jig formation process. Referring to FIG. 1 and FIG. 2, the formation device used for formation includes a frame (1), a pressure plate (2), and driving parts (3: 3a, 3b). The driving part includes a driving shaft (3a) and a driving motor (3b).

Inside the frame (1), a plurality of pressure plates (2) is disposed, and the secondary battery (B) which will perform the formation process is disposed between the pressure plates (2).

As illustrated in FIG. 1, when the driving shaft (3a) rotates by the rotation of the driving motor (3b) and the plurality of pressure plates (2) engaged therewith moves in one direction, the pressure plates pressurize both sides of the secondary battery (B) as shown in FIG. 2. As such, the formation device is configured to pressurize the battery with the lithium secondary battery interposed between a pair of pressure plates.

As described above, since the pressure plates are made of a solid material, is plate-shaped, and has a flat surface to pressurize the battery, it cannot pressurize a relatively thin part of the thickness of the battery to be pressurized. Accordingly, since the conventional formation device cannot pressurize the sliding portion which has relatively thin thickness, there was a problem in that internal gas was trapped in the corresponding part. However, since the activation method of the present invention includes a roll-pressing process of pressurizing the battery with a pressure roller, it is possible to pressurize the sliding portion, thereby it may prevent the risk of localized insufficient charging and lithium precipitation due to gas in the sliding portion.

In an exemplary embodiment of the present invention, the surface pressure applied during the formation process may be set in the range of 0.1 kgf/cm² to 7.5 kgf/cm², and preferably 0.2 kgf/cm² to 7.0 kgf/cm², and more preferably 0.3 kgf/cm² to 6.5 kgf/cm².

In the activation method according to an exemplary embodiment of the present invention, the formation process may include a plurality of formation processes in which a charge end SOC is set differently. For example, the formation process according to the present invention may include: a first formation step of charging the secondary battery to less than SOC 10%; a second formation step of charging the lithium secondary battery which has undergone first formation step to a state of charge in the range of SOC 10% to 30%; a third formation step of charging the lithium secondary battery which has undergone the second formation step to a state of charge set in the range of SOC 35% to 50%;and a fourth formation step of charging the lithium secondary battery which has undergone the third formation step to a state of charge set in the range of SOC more than 50% to 70%. The above example describes an exemplary embodiment in which the formation process consists of four steps, but it is not limited thereto, and the formation process may consist of two to five steps.

In addition, one or more conditions selected from the charging speed and the surface pressure applied to the secondary battery may be set differently for each of the plurality of formation steps.

Specifically, the battery may be pressurized at a weak surface pressure at the beginning of the formation process, and after the initial formation process, a stronger surface pressure may be applied to the battery.

At this time, the initial state of the formation process may be a state in which the state of charge of the secondary battery is between SOC 3% and SOC 30%.

Specifically, in the initial state of the formation process, it can be pressurized at a surface pressure of 0.1 kgf/cm² to 1.0 kgf/cm², preferably 0.2 kgf/cm² to 0.8 kgf/cm², and more preferably 0.3 kgf/cm² to 0.7 kgf/cm². In the subsequent formation process, it may pressurize at a surface pressure of 2.5 kgf/cm² to 7.5 kgf/cm², preferably 3.0 kgf/cm² to 7.0 kgf/cm², and more preferably 3.5 kgf/cm² to 6.5 kgf/cm².

In this way, in the formation process, when the pressure applied to the battery increases as the state of charge increases, the initial formation process in which a small amount of gas is generated allows the electrolyte solution to be sufficiently impregnated into the electrode assembly in the lithium secondary battery by applying a low surface pressure. In addition, in the middle/late formation process in which a large amount of internal gas is generated, a high surface pressure may be applied to remove the internal gas, thereby enabling the electrolyte assembly to be impregnated with an appropriate amount of electrolyte, and at the same time, efficiently removing the internal gas.

In addition, in the initial formation process, low speed charging of 0.01C to 0.5C may be performed, and in the middle and late formation process, charging may be performed at a charging speed of 0.6C to 1.5C. In the initial formation process, since the electrolyte solution may not be sufficiently impregnated into the electrode, the risk of uncharged may be reduced by performing low-speed charging.

In the present specification, the roll-pressing process will be described as 1 time roll-pressing process by combining a process of rolling a pair of press rollers from the center part of a battery toward one edge and a process of rolling from the central part of the battery toward other edge.

The roll-pressing process may be performed 1 time, or may be performed 2 to 5 times. The number of times of pressurization may be appropriately increased or decreased according to the thickness of the battery and the degree of sliding in the sliding portion.

In one specific example, the roll-pressing process may pressurize the battery at a nip-pressure of 20 kgf/cm to 60 kgf/cm, preferably 25 kgf/cm to 50 kgf/cm.

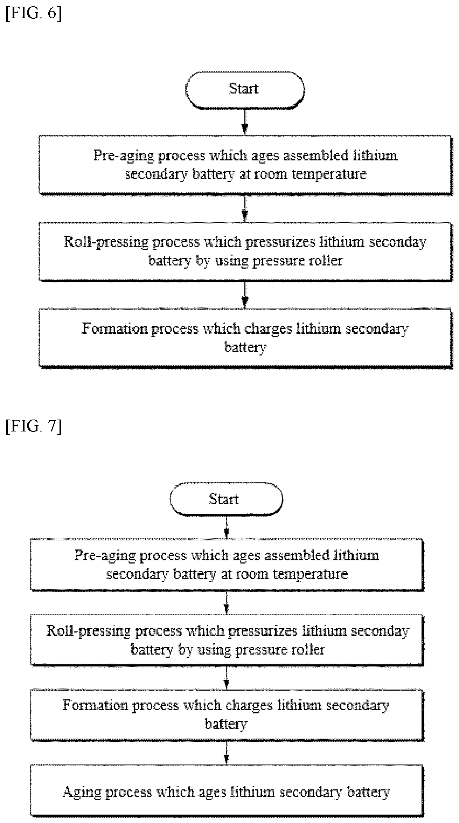

FIG. 6 is a flowchart of an activation method for a lithium secondary battery according to the first embodiment of the present invention. Referring to FIG. 6, in the activation method according to the first embodiment, it may be performed in the following sequential order: the pre-aging process which is aging the assembled lithium secondary battery at room temperature - the roll-pressing process which pressurizes the secondary battery using the pressure roller - the formation process which charges the lithium secondary battery. In other words, the activation method for the secondary battery according to the first embodiment is performing the roll-pressing process before the formation process.

Even before performing the formation process, bubbles may be generated in the process of injecting the electrolyte solution, and a small amount of gas may be generated as the electrode is impregnated with the electrolyte solution by the pre-aging process. Therefore, such bubbles or gas may be exhausted to the outside of the electrode assembly by performing the roll-pressing process before the formation process.

FIG. 7 is a flowchart of an activation method for a lithium secondary battery according to an exemplary embodiment of the present invention. Referring to the FIG. 7, in the activation method according to an exemplary embodiment, it may be performed in the following sequential order: the pre-aging process which ages the assembled lithium battery at room temperature - the roll-pressing process which pressurizes the secondary battery using the pressure roller - the formation process which charges the lithium secondary battery - the aging process which ages the lithium secondary battery that has undergone formation.

The aging process is a process of aging the secondary battery under various conditions in order to accelerate the stabilization of the SEI film formed through the formation process.

The aging process may go through a room temperature aging process in which the secondary battery is aged for a predetermined time under room temperature/normal pressure conditions, and depending on the purpose, the high temperature aging process may be performed instead of the room temperature aging, or both the room temperature aging and high temperature aging may be performed.

The high temperature aging is a process of aging the battery in a high temperature environment, and may facilitate the stabilization of the SEI film, and the high temperature aging process and the room temperature aging process may be sequentially performed on the initially charged battery.

In one specific example, the high temperature aging may be performed at a temperature of 50°C to 100°C, preferably 50°C to 80°C. The high temperature aging may be performed for 1 hour to 30 hours, and preferably 2 hours to 24 hours.

In one specific example, the room temperature aging may be performed at a temperature of 18°C to 28°C, specifically 19°C to 27°C, more specifically 20°C to 26°C, and even more specifically 21°C to 25°C. The room temperature aging may be performed for 12 hours to 120 hours, and 18 hours to 72 hours.

In addition, the activation method according to one embodiment of the present invention may further include a degassing process of exhausting gas collected inside the secondary battery to the outside. The degassing process is a process of exhausting gas inside of the secondary battery to the outside of the secondary battery, and thereby, by the roll-pressing process, gas collected inside the battery case or gas collected inside the gas pocket part is exhausted to the outside of the battery.

For such degassing process, various degassing technology known at the time of filing of the present invention may be employed. For example, in a pouch-shape secondary battery with one side extended, the degassing process may be performed by cutting the extended part and sealing the cut part. However, such degassing technology is widely known to those skilled in the art, thereby a detailed description thereof will be omitted.

In addition, in the activation method according to one embodiment of the present invention, the secondary battery may be completely discharged to the near SOC 0, and then the full charging and discharging process which charges the discharged secondary battery to 95% (SOC 95%) or more of the design capacity may be further performed. The full charging and discharging process may be performed once, or twice or more repeatedly.

In one specific example, in the activation method for a secondary battery according to the present invention, an additional aging process may be further performed after the full charging and discharging process. The additional aging process is a process of stabilizing the secondary battery and may be performed at room temperature or high temperature, and may be specifically performed for 1 day to 21 days. In order to sort out the low-voltage detective batteries which voltage drops to a range exceeding the self-discharge of the battery, the additional aging process may include a monitoring (OCV tracking) process including a process measuring the Open Circuit Voltage (OCV) of the battery at regular time intervals.

### The Activation method according to the Second Embodiment

The activation method for the secondary battery according to the second embodiment, the roll-pressing process may be performed during the formation process.

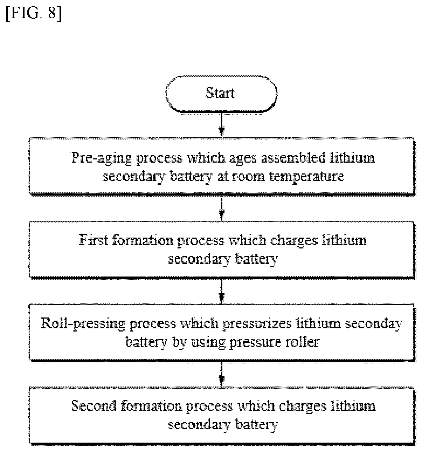

FIG. 8 is a flowchart of an activation method for the lithium secondary battery according to the second embodiment of the present invention. Referring to FIG. 8, the activation method according to the second embodiment of the present invention includes and sequentially performs the following steps: a pre-aging process - a first formation step which charges the lithium secondary battery - a roll-pressing process which pressurizes the secondary battery using a pressure roller - and a second formation step which charges the lithium secondary battery.

In the formation process, as charging the secondary battery, a large amount of gas is generated due to a full-scale chemical reaction between the electrode and the electrolyte. In the activation method for a secondary battery according to the second embodiment, since the roll-pressing process is performed in the middle of the formation process, there is an effect of effectively preventing gas generated in the formation process from being trapped in the electrode assembly.

In the activation method according to the second embodiment, the formation process may include a plurality of formation steps that a charge end SOC is set differently, and the roll-pressing process may be performed in between the formation steps.

For example, the formation process may include a first formation step that a charge end SOC is set in the range of SOC 10% to 40%, and a second formation step that a charge end SOC is set in the range of SOC 45% to 60%. The roll-pressing process may be performed in between the first formation step and the second formation step.

In addition, when the formation process is performed in a state in which the battery is loaded to the formation device as shown in FIG. 1 and FIG. 2, a roll-pressing process is performed after the first formation step is finished by taking out the battery from the formation device, and once the roll-pressing process is completed, the battery may be loaded to the formation device to perform the second formation step.

After the formation process is completed, the above-described aging process may be performed.

The activation method according to the second embodiment differs from the activation method according to the first embodiment only in that the roll-pressing process is performed in the middle of the formation process. Since the details of the pre-aging process, the roll-pressing process, and the formation process are the same as described above, a more detailed description will be omitted.

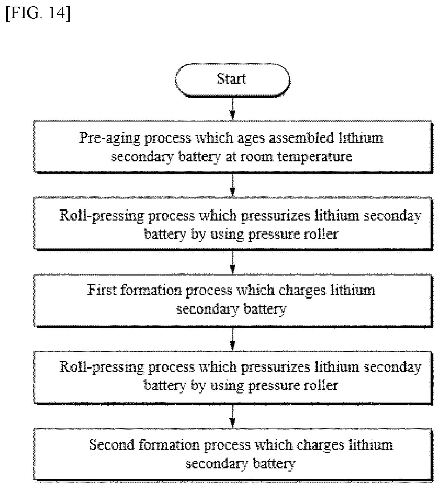

In addition, in the activation method according to another embodiment of the present invention, the roll-pressing process may be performed before and during the formation process, respectively. Referring to FIG. 14, the activation method according to another embodiment of the present invention may sequentially perform the pre-aging process - the roll-pressing process - the first formation step, and the second formation step.

Hereinafter, a lithium secondary battery manufactured according to an activation method of the present invention will be described in detail.

The lithium secondary battery of the present invention is manufactured by stacking an electrode assembly having a structure of a positive electrode/a separator/a negative electrode in a battery case, injecting an electrolyte solution and sealing.

Specifically, an electrode mixture including an electrode active material and a binder applies to an electrode current collector, and manufacture a positive electrode and a negative electrode respectively, and then an electrode assembly is prepared by interposing a separator between the positive electrode and the negative electrode.

A battery is assembled by disposing the prepared electrode assembly in a battery case, injecting an electrolyte, and sealing the battery case.

The assembly process of the battery is not particularly limited, and can be performed according to a known method.

In addition, the electrode assembly is not particularly limited as long as it has a structure including a positive electrode, a negative electrode, and a separator interposed between the positive and the negative electrode, for example, it may be a j elly-roll type, a stack type, or a stack/folding type.

When the battery case is a pouch type, an aluminum laminated pouch including an aluminum layer can be used. After injecting the electrolyte solution, the opened part of the aluminum laminated pouch can be sealed by heat welding or heat fusion.

The lithium secondary battery of the present invention includes an electrode assembly having a positive electrode, a negative electrode, a separator disposed between the positive electrode and the negative electrode, and an electrolyte.

The positive electrode includes a positive electrode active layer which is manufactured by applying, drying, and pressing a positive electrode mixture slurry to a positive electrode current collector and the above-mentioned current collector. The positive electrode mixture includes a positive electrode active material and a binder, and may further include a positive electrode additive, a conductive additive, and a filler, if necessary.

The positive electrode active material is a compound capable of reversible intercalation and de-intercalation of lithium, and specifically, it may include a lithium composite metal oxide having one or more metals such as cobalt, manganese, nickel, or aluminum. More specifically, the lithium composite metal oxide may include one or two or more compounds selected from the group consisting of lithium-manganese-based oxides (e.g. LiMnO₂, LiMn₂O_{4,}, etc.), lithium-cobalt-based oxides (e.g., LiCoO₂, etc.), lithium-nickel-based oxides (e.g., LiNiO₂, etc.), lithium-nickel-manganese oxides (e.g., LiNi_{1-Y}Mn_{Y}O₂ (where 0<Y<1), LiMn_{2-z}Ni_{z}O₄ (where 0<Z<2), etc.), lithium-nickel-cobalt-based oxides (e.g. LiNi_{1-Y1}Co_{Y1}O₂ (here, 0<Y1<1), etc.), lithium-manganese-cobalt-based oxides (e.g. LiCo_{1-Y2}Mn_{Y2}O₂; (here, 0<Y2<1), LiMn_{2-z1}Co_{z1}O₄ (here, 0<Z1<2), etc.), lithium-nickel-manganese-cobalt-based oxides (e.g., Li(NiₚCo_{q}Mnᵣ₁)O₂ (here, 0<p<1, 0<q<1 , 0<r1<1, p+q+r1=1) or Li(Niₚ₁Co_{q1}Mnᵣ₂)O₄ (where 0<p1<2, 0<q1<2, 0<r2<2, p1+q1+r2=2 ), etc.), or lithium nickel manganese cobalt composite oxides (e.g., Li(Niₚ₂Co_{q2}Mnᵣ₃M_{S2})O₂ (where M is selected from the group consisting of Al, Fe, V, Cr, Ti, Ta, Mg and Mo; p2, q2, r3 and s2 are atomic fractions of independent elements, respectively, 0<p2<1, 0<q2<1, 0<r3<1, 0<s2<1, p2+q2+r3+s2=1), etc.) etc. With respect to improving the battery capacity and stability, the lithium composite metal oxide may be LiCoO₂, LiMnO₂, LiNiO₂, lithium nickel manganese cobalt oxides (e.g. Li(Ni_{0.6}Mn_{0.2}Co_{0.2})O₂, Li(Ni_{0.5}Mn_{0.3}Co_{0.2})O₂ or Li(Ni_{0.8}Mn_{0.1}Co_{0.1})O₂), lithium nickel cobalt aluminum oxides (e.g. Li(Ni_{0.8}Co_{0.15}Al_{0.05})O₂ etc.). Considering the significance of the improvement effect by controlling the type and content ratio of the constituent elements forming the lithium composite metal oxide, the lithium composite metal oxide may be Li(Ni_{0.7}Mn_{0.15}Co_{0.15})O₂ or Li(Ni_{0.8}Mn_{0.1}Co_{0.1})O₂, etc., or a mixture of one or more thereof.

In addition, the content of the positive electrode active material with respect to 100 parts by weight of positive electrode mixture may be 85 to 99 parts by weight, specifically 88 to 98 parts by weight, 90 to 97 parts by weight, 92 to 95 parts by weight.

The conductive material may be used to improve performance such as electrical conductivity of the positive electrode, and at least one selected from the group consisting of natural graphite, artificial graphite, carbon black, acetylene black, ketjen black, and carbon fiber may be used. For example, the conductive material may include acetylene black.

In addition, the conductive material with respect to 100 parts by weight of mixture layer may be included in an amount of 1 to 10 parts by weight, specifically it may include 2 to 8 parts by weight; or may include 2 to 6 parts by weight of the conductive material.

In addition, the binder may include one or more resin selected from the group consisting of polyvinylidene fluoride-hexafluoropropylene (PVDF-co-HFP), polyvinylidenefluoride, polyacrylonitrile, polymethylmethacrylate, and copolymers thereof. As one example, the binder may include polyvinylidenefluoride.

In addition, the binder with respect to 100 parts by weight of the total mixture may be included in an amount of 1 to 10 parts by weight, specifically 1 to 8 parts by weight, or 1 to 6 parts by weight.

Furthermore, the average thickness of the mixture layer is not particularly limited, but specifically, it may be 50 µm to 300 µm, more specifically, 100 µm to 200 µm; 80 µm to 150 µm; 120 µm to 170 µm; 150 µm to 300 µm; 200 µm to 300 µm; or 150 µm to 190 µm.

In addition, as the current collector, the positive electrode may use one that has a high conductivity without causing chemical change in the battery. For example, stainless steel, aluminum, nickel, titanium, calcined carbon, etc. may be used, and in the case of aluminum or stainless steel, one that has surface coated with carbon, nickel, titanium, silver, or etc., may be used. In addition, the current collector may form micro/nano-scaled unevenness on the surface to increase the adhesion strength of the positive electrode active material, and may be able to change into diverse forms such as films, sheets, foils, nets, porous materials, foams, and non-woven fabrics. Furthermore, the average thickness of the current collector may be between 3 to 500 µm considering the conductivity and the total thickness of the positive electrode to be manufactured.

Also, the negative electrode of the lithium secondary battery used in the present invention is prepared by applying, drying, pressing a negative electrode active material on a negative electrode current collector, and if necessary, further selectively including a conductive material, organic binder polymer, additive, etc. like the positive electrode.

In addition, the negative electrode active layer may include, for example, carbon and graphite materials such as graphite having a completely layered crystal structure, soft carbon having a graphene structure (a structure in which hexagonal honeycomb shaped planes of carbon are arranged in layers), and carbon and graphite materials such as hard carbon, artificial graphite, expanded graphite, carbon fiber, non-graphitizable carbon, carbon black, carbon nanotube, fullerene, and activated carbon in which the structures described above are mixed with the amorphous portion; the metal complex oxides such as LiₓFe₂O₃ (0≤x≤1), LiₓWO₂ (0≤x≤1), SnₓMe₁₋ₓMe'yOz (Me: Mn, Fe, Pb, Ge; Me': Al, B, P, Si, elements in Group 1, Group 2, and Group 3 in the periodic table, halogens; 0<x≤1; 1≤y≤3; 1≤z≤8); lithium metals; lithium alloys; silicon-based alloys; tin-based alloys; the metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅, etc.; conductive polymers such as polyacetylene; Li-Co-Ni-based materials; titanium oxides; lithium titanium oxides etc., may be used.

As one example, the negative electrode active material may include both graphite and silicon (Si)- containing particles, and the graphite may include one or more of natural graphite having a layered crystal structure and artificial graphite having a perovskite structure; silicon (Si)- containing particles are particles having silicon (Si) as main component of the metal component, and may include silicon (Si) particles, SiO particles, SiO₂ particles, or a mixture of one or more thereof.

In addition, the negative electrode mixture layer with respect to 100 parts by weight of the total may have an average thickness of 100 µm to 200 µm, specifically, 100 µm to 180 µm, 100 µm to 150 µm, 120 µm to 200 µm, 140 µm to 200 µm, or 140 µm to 160 µm.

Furthermore, the negative electrode current collector is not particularly limited as long as it does not cause chemical change in the battery and has a high conductivity. For example, copper, stainless steel, nickel, titanium, fired carbon, etc. may be used, and in the case of copper or stainless steel, the surface coated with carbon, nickel, titanium, silver, or etc., may be used. In addition, in the same manner as the positive electrode current collector, the negative electrode current collector may form micro/nano-scaled unevenness on the surface to strengthen the bonding force with the negative electrode active material, and may be able to change into diverse forms such as films, sheets, foils, nets, porous materials, foams, and non-woven fabrics. In addition, the average thickness of the negative electrode current collector may be in the range of 3 to 500 µm considering the conductivity and the total thickness of the negative electrode to be manufactured.

In addition, the separator is interposed between the positive electrode and the negative electrode, and a thin insulating film having a high ion permeability and mechanical strength is used. The separator is not particularly limited as long as it is commonly used in the art, but to be specific, a chemically resistant and hydrophobic polypropylene; a glass fiber; or a sheet or a non-woven fabric made of polyethylene may be used. In some cases, a composite separator in which inorganic particles/organic particles are coated with an organic binder polymer may be used on a porous polymer substrate such as the sheet or the nonwoven fabric. When a solid electrolyte such as a polymer, etc. is used as an electrolyte, the solid electrolyte may also serve as the separator. In addition, the average pore diameter of the separator is 0.01 to 10 µm, and the average thickness may be 5 to 300 µm.

The electrolyte may include an organic solvent, a lithium salt, and an additive.

The organic solvent is not limited as long as decomposition due to an oxidation reaction or the like can be minimized during the charging/discharging process of the battery. For example, it may be a cyclic carbonate, a linear carbonate, an ester, an ether or a ketone, etc. These may be used alone, or two or more of them may be used in combination.

Among the above-mentioned organic solvents, carbonate organic solvents may be preferably used. Representative examples of cyclic carbonates are ethylene carbonate (EC), propylene carbonate (PC) and butylene carbonate (BC), and the representative examples of linear carbonates are dimethyl carbonate (DMC), diethyl carbonate (DEC), dipropyl carbonate (DPC), ethylmethyl carbonate (EMC), methylpropyl carbonate (MPC) and ethylpropyl carbonate (EPC).

Lithium salts commonly used in electrolytes of lithium secondary batteries such as LiPF₆, LiAsF₆, LiCF₃SO₃, LiN(CF₃SO₂)₂, LiBF₄, LiBF₆, LiSbF₆, LiN(C₂F₅SO₂)₂, LiAlO₄, LiAlCl₄, LiSO₃CF₃ and LiClO₄, etc., may be used for the lithium salt without limitation, and they may be used alone, or two or more may be used in combination.

In addition, the electrolyte solution further includes an additive. For example, any one or a mixture of two or more selected from the group consisting of vnylene carbonate, vinylethylene carbonate, fluoroethylene carbonate, cyclic sulfite, saturated sultone, unsaturated sultone, acyclic sulfone, lithium oxalyl difluoroborate (LiODFB), and derivatives thereof may be used as the additive in order to stably form an SEI film, but it is not limited thereto.

As the cyclic sulfite, it may include ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite, and 1,3-butylene glycol sulfite. As saturated sultone, it may include 1,3-propane sultone, and 1,4-butane sultone. As unsaturated sultone, it may include ethene sultone, 1,3-propene sultone, 1,4-butene sultone, 1-methyl-1, and 3-propene sultone. As Acyclic sulfone, it may include divinyl sulfone, dimethyl sulfone, diethyl sulfone, methylethyl sulfone, methylvinyl sulfone, and the like.

These additives are added to the electrolyte solution to improve low-temperature output characteristics by forming a firm SEI film on the negative electrode, as well as to suppress decomposition of the positive electrode surface which may occur during high-temperature cycle operation and to prevent oxidation of the electrolyte solution.

### Activation device for secondary battery

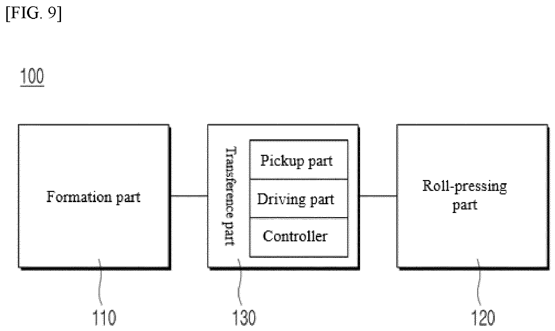

FIG. 9 is a conceptual diagram of an activation device for a lithium secondary battery. Referring to FIG. 9, the activation device (100) includes a formation part (110) configured to be able to pressurize while charging and discharging the battery; and a roll-pressing part (120) which includes an upper and a lower pressure roller, and pressurizes the battery in a state in which battery is interposed between the upper and lower pressure rollers.

In addition, the activation device further includes a transference part (130) which takes out and carries in/out the batteries in between the formation part (110) and the roll-pressing part (120). The transference part (130) includes a pickup part which carries in and out the battery accommodated in the formation part (110) or the roll-pressing part (120); a driving part which moves the pickup part; and a controller which controls the operations of the pickup part and the driving part.

In the middle of the formation process, in order to perform the roll-pressing pressurization of the present invention by the roll-pressing part, it is necessary to transfer the battery accommodated in the formation part (110) to the roll-pressing part (120), and the transfererence part (130) is configured to carry out of the battery from the formation part (110) and transfer it to the roll-pressing part (120), or carry out the roll-pressed battery from the roll-pressing part (120) and transfer to the formation part (110).

The pickup part picks up the battery so that the battery accommodated in the formation part or the roll-pressing part can be taken out, and it is configured to move to the roll-pressing part or the formation part by the driving part and put down the battery into the roll-pressing part or the formation part. In one specific example, the pickup part may be a robot arm.

In addition, the controller controls the operation of the driving part and the pickup part.

The formation part is configured to pressurize while charging/discharging the battery. In one specific example, the formation part may include a frame for accommodating a plurality of battery cells; a charging/discharging unit connected to the electrode leads of the battery to charge/discharge the battery; a plurality of pressure plates which pressure both sides of the battery; and a driving part for moving the plurality of pressure plates.

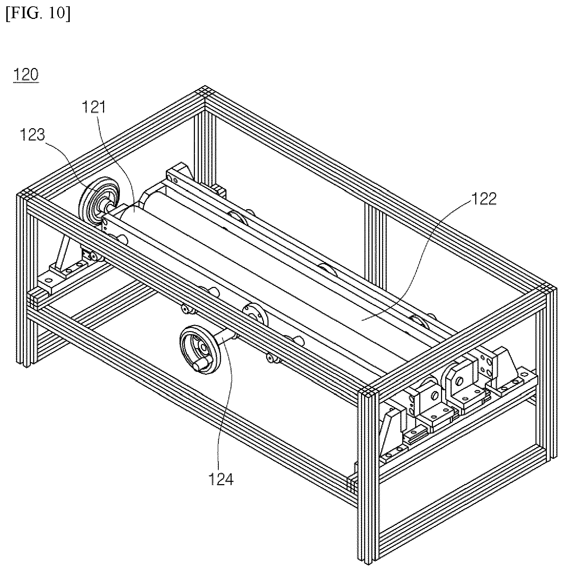

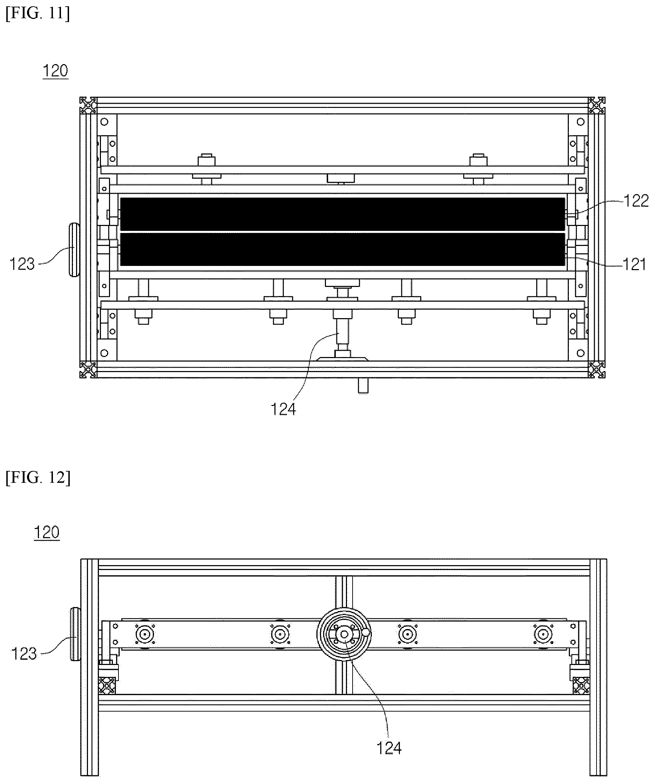

FIG. 10 is a perspective view of a roll-pressing part according to an exemplary embodiment of the present invention. FIG. 11 is a top view of the roll-pressing part, and FIG. 12 is a front view of the roll-pressing part. Referring to these drawings, the roll-pressing part of the present invention includes an upper pressure roller (121), a lower pressure roller (122); a driving part (123) which drives the upper pressure roller and the lower pressure roller to rotate; and a pressure cylinder (124) which causes the upper pressure roller to move in the direction of the lower pressure roller or vice versa.

Referring to FIG. 3, FIG. 4, FIG. 10 to FIG. 12, the upper pressure roller (121) and the lower pressure roller (122) are the means for pressurizing the battery by contacting the battery. The upper pressure roller (121) pressurizes the upper surface of the battery (B), and the lower pressure roller (122) pressurizes the lower surface of the battery (B).

The driving part (123) is located on one side of the upper pressure roller (121) and the lower pressure roller (122), and applies a driving force so that the upper pressure roller and the lower pressure roller are rotated.

The pressure cylinder (124) is a means for adjusting the load applied to the battery by adjusting the distance between the upper pressure roller (121) and the lower pressure roller (122), and it makes the upper pressure roller (121) to reciprocate in the direction of the lower pressure roller (122) or in the opposite direction. As the distance between the upper pressure roller and the lower pressure roller decreases, the force applied to the battery increases, and as the distance between the upper pressure roller and the lower pressure roller increases, the force applied to the battery decreases.

Since the activation device of the present invention includes the roll-pressing part, it may pressurize the sliding portion having a relatively thin thickness with the same force as the planar portion. Thereby, it may improve the battery performance by preventing gas from being trapped in the corresponding part.

Hereinafter, the present invention will be described in detail with reference to examples. However, the embodiments according to the present invention may be modified into various other forms, and the scope of the present invention should not be construed as being limited to the examples described below. The examples of the present invention are provided to more fully describe the present invention to those skilled in the art.

### Preparation example: Manufacturing a lithium secondary battery

95 parts by weight of LiNi_{0.8}Co_{0.1}Mn_{0.1}O₂ as a positive electrode active material, 0.9 parts by weight of Li₆Co_{0.7}Zn_{0.3}O₄ as a positive electrode additive, 1.6 parts by weight of PVdF as a binder, and 2.5 parts by weight of carbon black as a conductive material are weighted and mixed into the N-methylpyrrolidone (NMP) solvent to manufacture a positive electrode mixture layer slurry. The slurry for the mixture layer was applied on an aluminum foil, dried, and roll pressed to form a positive electrode having positive electrode mixture layer.

85 parts by weight of natural graphite as a carbon-based active material, 5 parts by weight of SiO (silicon oxide) as a silicon-based active material, and 4 parts by weight of PDVF as a binder were mixed into N-methylpyrrolidone solvent to form a slurry for a negative electrode mixture layer. Then it was coated on a copper foil to prepare a negative electrode having a negative electrode mixture layer (average thickness: 180*µ*m).

Moreover, an electrode assembly was manufactured by interposing and stacking a separator (thickness: about 16µm) made of a porous polyethylene (PE) film between each of the prepared positive electrode and the negative electrode. After positioning the electrode assembly inside the battery case, electrolyte solution was injected into the case, and leaving alone at room temperature for 3 days so that the electrolyte solution is sufficiently impregnated, and the lithium secondary battery was manufactured. A battery was completed by injecting an electrolyte solution in which 1M LiPF₆ is dissolved into an organic solvent in which ethereal carbonate (EC) and ethyl methyl carbonate (EMC) are mixed in a composition of 3:7 (volume ratio).

### Example 1

The assembled lithium secondary battery of the preparation example is prepared and pre-aged at a room temperature of 25°C for 24 hours. The pre-aged secondary battery is roll pressed twice from the center of the battery to the edges where the electrode leads are located by using a roll-pressing part illustrated in the FIG. 10. At this time, the nip-pressure applied to the battery by the roll-pressing part was set as 40 kfg/cm. Then, the formation process was completed by loading the battery to the formation part shown in FIG. 1, pressurizing the battery, and charging it until it reached SOC 60%. At this time, the charging speed was 0.6 C, and the surface pressure applied to the battery was 5.0 kgf/cm².

Thereafter, the secondary battery was subjected to high temperature aging at 60°C for 24 hours and room temperature aging at 23°C for 48 hours. By full charging/discharging the aged secondary battery, the manufacture of the secondary battery was completed.

### Example 2

The assembled lithium secondary battery of the preparation example was prepared, and it was pre-aged by aging at temperature of 25° C for 24 hours. After loading the pre-aged secondary battery to the formation part shown in FIG. 1, the secondary battery was charged at a charging speed of 0.2C until the state of charge of the secondary battery reached SOC 17%, and the first formation step was performed while pressurizing the battery at a pressure of 0.5kgf/cm² during charging. Then, the secondary battery was taken out from the formation part and was roll pressed twice from the center of the battery toward the edge where the electrode lead was located using the roll-pressing part shown in in FIG. 10. At this time, the nip-pressure applied to the battery by the roll-pressing part was 40 kfg/cm. Thereafter, the secondary battery was taken out from the roll-pressing part, installed in the formation part again, and was charged at a charging speed of 1.0C until it reached the state of charge of SOC 60%, and the second formation step was performed while pressurizing the battery at a pressure of 5.0 kgf/cm².

Thereafter, the high temperature aging was conducted on the secondary battery at 60°C for 24 hours, and the room temperature aging was conducted at 23°C for 48 hours. Then the manufacture of the secondary battery was completed by performing full charging/discharging to the aged secondary battery.

### Comparative Example

The secondary battery was manufactured in the same manner as in Example 1, except that the roll-pressing process by the roll-pressing part was not performed.

### Experimental Example: The observation of lithium precipitation

Each of the secondary batteries in the Examples and Comparative Example was charged with a constant current at 0.33C, cut off at 4.2V, charged at constant voltage, then charged by a 0.05 cut off charging, and discharged at 0.5C to 3.0V. The above-mentioned process constitutes 1-time cycle, and 100 time cycles of charging/discharging were conducted, and the battery was disassembled to observe whether a lithium precipitation has taken place.

**[Table 1]**

| | Whether there was lithium precipitation |
|---|---|
| Example 1 | X |
| Example 2 | X |
| Comparative Example | O |

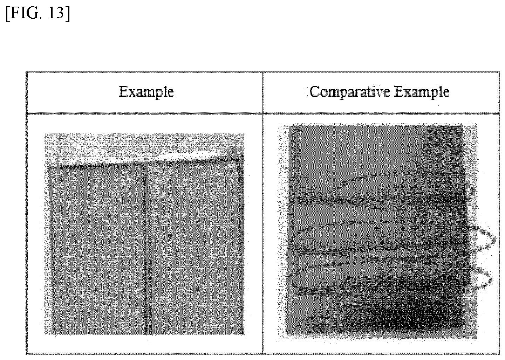

Lithium was not precipitated in the battery of Example, but lithium was precipitated in the battery of Comparative Example. FIG. 13 is a photograph of a negative electrode obtained by disassembling the secondary battery manufactured according to the Comparative Example after repeating charging/discharging according to the Experimental Example. Referring to FIG. 13, it can be confirmed that lithium was precipitated in the edge region of the negative electrode where the sliding portion is located. This is determined to be an effect of pressing the sliding portion by performing a roll-pressing process before or during the roll-pressing process.

As described above, the activation method and the activation device according to the present invention prevent gas from being trapped in the sliding portion, thereby preventing the risk of localized charging non-uniformity and lithium precipitation.

## Claims

1. An activation method for a lithium secondary battery, comprising:
a pre-aging process which ages the assembled lithium secondary battery at room temperature ranging from 18 °Cto 28 °C;
a formation process which charges the lithium secondary battery; and
a roll-pressing process which pressurizes the lithium secondary battery by using a pressure roller;
wherein the roll-pressing process pressurizes from the center of the lithium secondary battery toward the edge where the electrode lead is located.

2. The activation method for a lithium secondary battery of claim 1, wherein
the roll-pressing process is performed before the formation process.

3. The activation method for a lithium secondary battery of claim 1, wherein
the roll-pressing process is performed during the formation process.

4. The activation method for a lithium secondary battery of claim 1, wherein
the roll-pressing process is performed before and during the formation process, respectively.

5. The activation method for a lithium secondary battery of claim 1, wherein
the roll-pressing process is performed 2 times to 5 times.

6. The activation method for a lithium secondary battery of claim 1, wherein
the roll-pressing process pressurizes the lithium secondary battery at a nip-pressure of 20 to 60 kgf/cm.

7. The activation method for a lithium secondary battery of claim 1, wherein
the pressure roller consists of an upper pressure roller and a lower pressure roller, and the lithium secondary battery is pressurized by passing between the upper pressure roller and the lower pressure roller.

8. The activation method for a lithium secondary battery of claim 1, wherein
the formation process comprises a process which applies a surface pressure to the lithium secondary battery being charged.

9. The activation method of a lithium secondary battery of claim 8, wherein
the formation process comprises of a plurality of formation steps that a charge end SOC is set differently, and one or more selected from the conditions of charging speed and the surface pressure applied to the lithium secondary battery may be set differently for each of the formation steps.

10. The activation method of a lithium secondary battery of claim 1, wherein
further comprises an aging process which ages the battery that has completed formation.

## Patentansprüche

1. Aktivierungsverfahren für eine Lithium-Sekundärbatterie, umfassend:
einen Voralterungsprozess, der die zusammengebaute Lithium-Sekundärbatterie bei Raumtemperatur altert, die von 18 °C bis 28 °C reicht;
einen Bildungsprozess, der die Lithium-Sekundärbatterie auflädt; und
einen Walzenpressprozess, der die Lithium-Sekundärbatterie unter Verwendung einer Druckwalze unter Druck setzt;
wobei der Walzenpressprozess von der Mitte der Lithium-Sekundärbatterie in Richtung der Kante, wo sich die Elektrodenleitung befindet, unter Druck setzt.

2. Aktivierungsverfahren für eine Lithium-Sekundärbatterie nach Anspruch 1, wobei
der Walzenpressprozess vor dem Bildungsprozess durchgeführt wird.

3. Aktivierungsverfahren für eine Lithium-Sekundärbatterie nach Anspruch 1, wobei
der Walzenpressprozess während des Bildungsprozesses durchgeführt wird.

4. Aktivierungsverfahren für eine Lithium-Sekundärbatterie nach Anspruch 1, wobei
der Walzenpressprozess vor bzw. während des Bildungsprozesses durchgeführt wird.

5. Aktivierungsverfahren für eine Lithium-Sekundärbatterie nach Anspruch 1, wobei
der Walzenpressprozess 2-mal bis 5-mal durchgeführt wird.

6. Aktivierungsverfahren für eine Lithium-Sekundärbatterie nach Anspruch 1, wobei
der Walzenpressprozess die Lithium-Sekundärbatterie mit einem Walzenspaltdruck von 20 bis 60 kgf/cm unter Druck setzt.

7. Aktivierungsverfahren für eine Lithium-Sekundärbatterie nach Anspruch 1, wobei
die Druckwalze aus einer oberen Druckwalze und einer unteren Druckwalze besteht und die Lithium-Sekundärbatterie unter Druck gesetzt wird, indem sie zwischen der oberen Druckwalze und der unteren Druckwalze hindurchgeht.

8. Aktivierungsverfahren für eine Lithium-Sekundärbatterie nach Anspruch 1, wobei
der Bildungsprozess einen Prozess umfasst, der einen Oberflächendruck auf die Lithium-Sekundärbatterie, die aufgeladen wird, ausübt.

9. Aktivierungsverfahren für eine Lithium-Sekundärbatterie nach Anspruch 8, wobei
der Bildungsprozess aus einer Vielzahl von Bildungsschritten umfasst, dass ein Ladeende-SOC unterschiedlich eingestellt wird, und eine oder mehrere, ausgewählt aus den Bedingungen der Ladegeschwindigkeit und des Oberflächendrucks, der auf die Lithium-Sekundärbatterie ausgeübt wird, für jeden der Bildungsschritte unterschiedlich eingestellt werden können.

10. Aktivierungsverfahren für eine Lithium-Sekundärbatterie nach Anspruch 1, wobei
es ferner einen Alterungsprozess umfasst, der die Batterie, die die Bildung abgeschlossen hat, altert.

## Revendications

1. Procédé d'activation pour une batterie secondaire au lithium, comprenant :
un processus de pré-vieillissement vieillissant la batterie secondaire au lithium assemblée à une température ambiante allant de 18 °C à 28 °C ;
un processus de formation chargeant la batterie secondaire au lithium ; et
un processus de pressage par rouleau pressurisant la batterie secondaire au lithium à l'aide d'un rouleau presseur ;
le processus de pressage par rouleau pressurisant du centre de la batterie secondaire au lithium vers le bord où se trouve le câble de l'électrode.

2. Procédé d'activation pour une batterie secondaire au lithium selon la revendication 1,
le processus de pressage par rouleau étant effectué avant le processus de formation.

3. Procédé d'activation pour une batterie secondaire au lithium selon la revendication 1,
le processus de pressage par rouleau étant effectué au cours du processus de formation.

4. Procédé d'activation pour une batterie secondaire au lithium selon la revendication 1,
le processus de pressage par rouleau étant effectué avant le processus de formation et au cours de celui-ci, respectivement.

5. Procédé d'activation pour une batterie secondaire au lithium selon la revendication 1,
le processus de pressage des rouleaux étant effectué de 2 à 5 fois.

6. Procédé d'activation pour une batterie secondaire au lithium selon la revendication 1,
le processus de pressage par rouleau pressurisant la batterie secondaire au lithium à une pression de pincement de 20 à 60 kgf/cm.

7. Procédé d'activation pour une batterie secondaire au lithium selon la revendication 1,
le rouleau presseur se composant d'un rouleau presseur supérieur et d'un rouleau presseur inférieur, et la batterie secondaire au lithium étant pressurisée en passant entre le rouleau presseur supérieur et le rouleau presseur inférieur.

8. Procédé d'activation pour une batterie secondaire au lithium selon la revendication 1,
le processus de formation comprenant un processus appliquant une pression de surface à la batterie secondaire lithium en cours de charge.

9. Procédé d'activation pour une batterie secondaire au lithium selon la revendication 8,
le processus de formation comprenant une pluralité d'étapes de formation d'après lequel un état de charge côté charge est réglé différemment, et une ou plusieurs des conditions de vitesse de charge et de pression de surface appliquées à la batterie secondaire au lithium peuvent être réglées différemment pour chacune des étapes de formation.

10. Procédé d'activation d'une batterie secondaire au lithium selon la revendication 1,
comprenant en outre un processus de vieillissement vieillissant la batterie dont la formation est achevée.
